# FASCICULE DE BREVET EUROPEEN

(11) **EP 1 814 935 B1**
(45) Date de publication et mention de la délivrance du brevet: **16.07.2008**
(21) Numéro de dépôt: 05819008.3
(22) Date de dépôt: 03.11.2005
(51) Int. Cl.: C08J 9/32, C09J 5/08

(54) **PROCEDE D'ASSEMBLAGE DE DEUX SUBSTRATS PAR COLLAGE, PROCEDE DE DEMONTAGE DE CET ASSEMBLAGE COLLE PAR MIGRATION**
VERFAHREN ZUM ZUSAMMENFÜGEN VON ZWEI SUBSTRATEN MITTELS KLEBEN UND VERFAHREN ZUM AUSEINANDERNEHMEN DER GEKLEBTEN ANORDNUNG MITTELS MIGRATION
METHOD OF ASSEMBLING TWO SUBSTRATES BY MEANS OF BONDING AND METHOD OF DISASSEMBLING SAID BONDED ASSEMBLY BY MEANS OF MIGRATION

(30) Priorité: 04.11.2004 FR 0452532
(43) Date de publication de la demande: 08.08.2007
(73) Titulaire: Rescoll, 33600 Pessac (FR)
(72) Inventeur: ALCORTA, José, F-33130 BEGLES (FR); PAPON, Eric, F-33350 SAINT MAGNE DE CASTILLON (FR); DALET, Pierre, F-33210 SAUTERNES (FR)
(74) Mandataire: Fantin, Laurent
(86) Numéro de dépôt international: PCT/FR2005/050926
(87) Numéro de publication internationale: WO 2006/048585

(56) Documents cités:
- WO-A-00/75254

## Description

La présente invention concerne un procédé d'assemblage de deux substrats par collage et un procédé de démontage de cet assemblage collé par migration et création d'une interface de faible cohésion.

L'invention couvre aussi les compositions aptes à permettre la mise en oeuvre des procédés de collage et de démontage.

Dans l'industrie, il existe de plus en plus d'assemblages réalisés par collage avec des compositions parfaitement adaptées aux conditions nécessaires de résistance mécanique, de résistance aux températures subies et à de nombreux autres paramètres tant physiques que chimiques.

Les substrats ainsi collés donnent totale satisfaction dans l'assemblage résultant.

Par contre, le problème survient lorsque les substrats ainsi assemblés doivent être désolidarisés, par exemple en vue de changer l'un ou l'autre des substrats assemblés.

Contrairement aux liaisons mécaniques qui autorisent un démontage simple par vis ou rivet pour donner un exemple, il est difficile de démonter les substrats collés.

De plus, dans le cas du collage, si l'on assure un démontage il faut aussi prévoir le remontage d'un substrat nouveau en lieu et place du substrat défectueux. Les surfaces doivent alors être aptes à recevoir cette nouvelle liaison collée.

Les liaisons par collage sont réalisées en préparant les surfaces à lier par collage pour qu'elles présentent un état de surface adapté.

Le joint est disposé sur au moins une des faces, les substrats sont positionnés et le durcissement de la colle est réalisé par chauffage, par émission de rayonnements ou par un catalyseur associé pour donner des exemples. Les substrats sont ainsi solidarisés.

Si la séparation de cette liaison des deux substrats est mécanique en tentant de ne dégrader qu'un des deux substrats, on constate que dans la plupart des cas, au moins l'un des substrats est dégradé, voire les deux.

De plus, dans le cas où la séparation est réussie, le substrat conservé intact présente un état de surface qui interdit une nouvelle liaison par collage ou engendre pour le moins un travail important de traitement de surface.

Une solution consiste à prévoir une réversibilité contrôlée des liaisons collées avec trois moyens pour mettre en oeuvre cette réversibilité, par voie chimique, physico-chimique ou physique.

La voie chimique utilise des joints avec des bases polymères dont la structure peut être modifiée ou détruite par des actions extérieures telles que la chaleur, les rayonnements ou les champs électromagnétiques.

On peut ainsi disposer d'un polymère comportant une chaîne chimique avec des groupements aptes à former une chaîne par polymérisation sous l'action d'une longueur d'ondes donnée tandis que la séparation est obtenue, le moment venu, par dégradation de cette chaîne sous l'action d'une autre longueur d'ondes déterminée.

Néanmoins, de tels produits présentent des performances d'adhésion relativement faibles et se trouvent être liés à des applications très spécifiques.

On connaît des utilisations dans la fixation de composants électroniques, afin de permettre leur retrait et leur changement rapide mais on comprend aussi que les performances mécaniques requises par exemple sont faibles.

La voie physico-chimique consiste à associer des résines thermoplastiques aux résines thermodurcissables connues pour leurs performances mécaniques. Les thermoplastiques ayant la capacité de perdre une grande partie de leurs propriétés sous l'effet de la chaleur, la liaison par un joint comportant une combinaison d'un thermodurcissable et d'un thermoplastique peut s'avérer démontable par destruction du joint dans sa masse. Dans ce cas, le démontage est possible mais les deux substrats portent généralement une partie de ce joint dégradé et il faut au moins retirer la partie restante du joint sur le substrat à réutiliser.

On peut noter aussi que les performances des thermodurcissables sont affaiblies par la présence du thermoplastique et ceci d'autant plus que les substrats travaillent en température, même en restant éloigné des plages de températures de dégradation.

La voie physique consiste à introduire dans la composition adhésive elle-même, par ailleurs connue pour ses capacités d'adhésivité, des additifs capables, sous une stimulation extérieure, souvent la chaleur, de détruire la cohésion du joint dans sa masse.

Toute altération des conditions de réalisation du collage, notamment une augmentation de la viscosité ou l'introduction de charges en quantité importante, fragilise nécessairement la liaison.

On sait aussi que, dans certains cas, par exemple dans l'aéronautique, les colles sont homologuées et toute modification de la composition de ladite colle nécessite alors une nouvelle homologation qui peut s'avérer très lourde.

Il existe de nombreuses applications qui nécessitent la séparation de deux substrats collés et de plus en plus à des fins de recyclage. En effet, pour permettre le classement des matériaux de nature différente et leur recyclage indépendamment, par exemple une matière composite et un renfort métallique, il est nécessaire de procéder à ce type de séparation.

L'art antérieur prévoit ainsi systématiquement pour la séparation de deux substrats collés, la dégradation du joint assurant la liaison, dans sa masse.

Une illustration d'un tel art antérieur est la demande de brevet WO 00/75254 qui décrit un agencement avec un joint à base de polymère incluant des microcapsules contenant des agents d'expansion qui provoquent, sous l'action de la chaleur directe et en puissance suffisante, un ramollissement du joint et une décohésion du joint, facilitant ainsi le démontage. Une application particulière est le montage et le retrait de pare-brise de véhicules.

On note que de telles compositions incluant des microcapsules peuvent être utilisées en les intégrant dans le joint lui-même, dans la masse. L'épaisseur est trop importante et la régularité de dépose en couche mince impossible ou pour le moins très délicate à mettre en oeuvre.

On constate également dans ce type de joint à dégradation dans la masse que les microcapsules intégrées dans la masse peuvent générer des problèmes d'interface capsule/polymère et affecter les qualités mécaniques du joint lui-même.

Le but de la présente invention est de proposer un procédé de démontage de deux substrats collés qui ne modifie pas les qualités du joint d'adhésif initial, notamment ses différents paramètres mécaniques, qui autorise la démontabilité sans dégrader l'un ou l'autre des substrats, qui permet de séparer les deux substrats en obtenant une surface exempte de joint d'au moins un des substrats, éventuellement prête à être de nouveau assemblée à un nouveau substrat.

A cet effet le procédé d'assemblage/démontage selon l'invention d'un premier substrat et d'un second substrat par collage avec au moins un joint se caractérise en ce qu'il consiste à réaliser la succession d'étapes suivantes:
i/ Assemblage :
   - disposer au moins un joint de matière polymère entre le premier et le second substrat, ledit au moins un joint polymère incluant un agent migrant,
   - presser les deux substrats l'un contre l'autre, et
   - polymériser le joint pour obtenir l'assemblage collé des deux substrats.
ii/ Démontage :
   - apporter de l'énergie à destination de l'agent migrant incorporé dans la base polymère en sorte de provoquer, lorsqu'il est soumis à un apport d'énergie, la migration de cet agent vers au moins l'une des interfaces du joint avec un autre joint ou avec l'un au moins des substrats auquel il est lié pour générer une couche de faible cohésion, et
   - séparer les éléments au moins à l'une des interfaces comportant une couche de faible cohésion.

L'invention couvre aussi le liant comprenant une base polymère ou une cire incorporant au moins un agent migrant, cet agent migrant ayant après migration, lorsqu'il est soumis à un apport d'énergie, une aptitude à créer une couche de faible cohésion.

L'invention est maintenant décrite en détail suivant un mode de réalisation particulier, non limitatif.

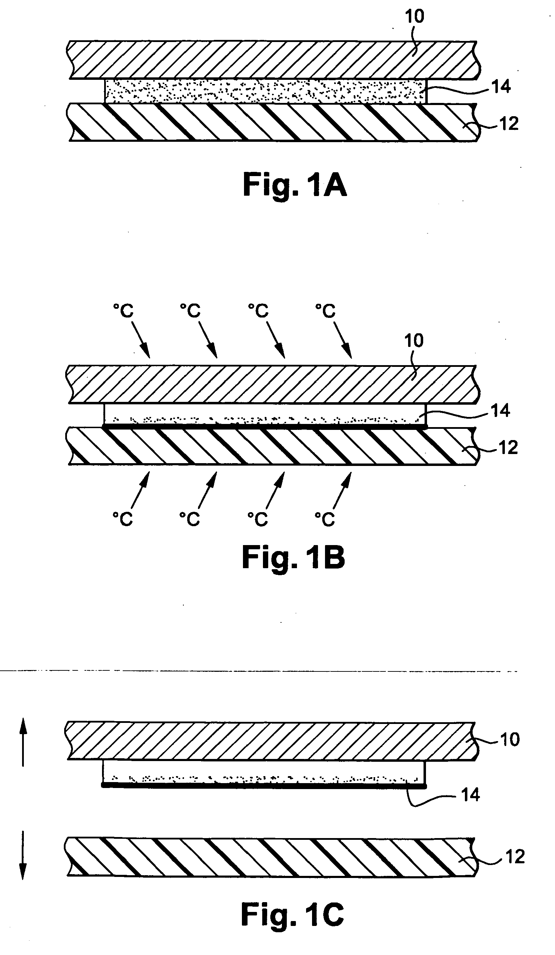

Les figures 1A à 1C représentent schématiquement un assemblage tel qu'il se présente lors de la mise en contact, lors de l'apport de chaleur pour la migration et lors du démontage.

Le procédé selon la présente invention consiste à réaliser un assemblage d'un premier substrat 10 et d'un second substrat 12 en interposant au moins un joint 14 adhésif, comme montré sur la figure 1A.

Ce joint peut être de type connu à base de résine acrylique, époxy, polyuréthane ou élastomère et la procédure de mise en oeuvre est conservée.

On considère un premier et un second substrat avec un joint ce qui définit deux interfaces, l'une entre ce joint et le premier substrat et l'autre entre ce joint et le second substrat.

Néanmoins, il est entendu pour la suite de la description que dans le cas de deux joints superposés, liés entre eux et cet ensemble étant lui-même lié aux deux substrats, il est défini une interface supplémentaire entre les deux joints.

On considère comme équivalent une interface entre deux joints ou entre un joint et un substrat.

L'un au moins des joints inclut au moins un composé apte à migrer dans la matrice du joint pour générer une couche de faible cohésion à l'une au moins des interfaces dudit joint avec l'un des substrats ou avec un autre joint.

C'est ainsi que l'on peut citer les exemples suivants :

### 1/ Exemple 1 : composite

- une base polymère constituant la matrice : par exemple une base époxy le DGEBA (diglycydil éther du bisphénol A)
- un réticulant de la base polymère choisie, en l'occurrence la DETA (diéthylène triamine)
- un agent migrant inclus dans la base polymère : par exemple une polyoléfine et plus particulièrement une paraffine 90-92, et
- un solvant servant à la dissolution du mélange et à maintenir l'agent migrant sous forme dispersée, dans ce cas un alcane.

La mise en oeuvre et les proportions sont les suivantes :
1/ préparation d'un premier mélange A comprenant 11 parties de DETA pour 100 parties de DGEBA,
2/ préparation d'un second mélange B par adjonction de 0,5 à 30% d'agent migrant au mélange A, et
3/ dilution du mélange B dans une proportion de 10 à 90% d'extrait sec dans le solvant.

Les tests sur éprouvettes sont conduits de la façon suivante :
- deux premières éprouvettes de composite sont traitées à l'acétone puis séchées,
- ces éprouvettes ont enduites du mélange B dilué, et
- la réticulation est conduite soit par une longue durée à température ambiante soit par accélération en augmentant la température.

Après réticulation complète, des essais de cisaillement sont conduits, de façon comparée, entre ces deux éprouvettes et deux secondes éprouvettes liées entre elles par une base polymère époxy en présence d'un agent de réticulation, ceci de façon connue.

Afin de permettre la migration et de générer la couche de faible cohésion pour le jeu des deux premières éprouvettes et de soumettre le second jeu aux mêmes contraintes, les deux jeux d'éprouvettes sont passés pendant deux heures à 120°C.

| Substrat | Vieillissement | Contrainte MPa | Type de rupture |
|---|---|---|---|
| Composite | Non | 8,1 | Délaminage du composite |
| Composite | Oui | 0,5 | Adhésive |

On constate une très forte diminution de la résistance mécanique de la liaison au droit de l'interface comportant la couche de faible cohésion générée.

### 2/ Exemple 2 : substrat bois

- un bouch-pores du bois permettant de réaliser un film continu : par exemple un adhésif phénolique ou résorcine,
- un adhésif constituant la matrice : par exemple un adhésif phénolique ou résorcine, et
- un agent migrant inclus dans l'adhésif : par exemple une paraffine et plus particulièrement une paraffine 90-92.

La mise en oeuvre et les proportions sont les suivantes :
1/ Préparation du support en disposant une première couche de résine sur chaque substrat constitué de bois pour obtenir un état de surface adapté et pour boucher les pores, et
2/ Préparation d'un mélange comprenant une résine phénolique incorporant 0,5 à 30% d'agent migrant.

Les tests sur éprouvettes sont conduits de la façon suivante :
- deux premières éprouvettes de bois sont enduites d'une couche de bouche-pores,
- ces éprouvettes ont enduites du mélange avec l'agent migrant, et
- la réticulation de l'adhésif est conduite soit par une longue durée à température ambiante soit par accélération en augmentant la température.

Après réticulation complète de l'adhésif, des essais de cisaillement sont conduits, de façon comparée, entre ces deux éprouvettes et deux secondes éprouvettes en bois préparées de la même façon avec une couche de bouche-pores, liées entre elles par le même adhésif que les substrats du premier jeu.

Afin de permettre la migration et de générer la couche de faible cohésion pour le jeu des deux premières éprouvettes et de soumettre le second jeu aux mêmes contraintes, les deux jeux d'éprouvettes sont passés pendant deux heures à 100°C.

Le tests sont des tests de cisaillement à froid conduits a température ambiante.

| Substrat | Vieillissement | Contrainte MPa | Type de rupture |
|---|---|---|---|
| Bois | Non | 11 | Cohésive dans le bois |
| Bois | Oui | 0,9 | Adhésive entre le film bouche-pores et le mélange |

On constate une très forte diminution de la résistance de la liaison entre le joint et le substrat à l'interface lorsqu' il est générée une couche de faible cohésion.

### 3/ Exemple 3 : substrat verre

- un adhésif constituant la matrice : par exemple un adhésif du type radicalaire durcissant par rayonnement UV, et
- un agent migrant inclus dans l'adhésif : par exemple du PTSH (p-toluènesulfonhydrazide).

La mise en oeuvre et les proportions sont les suivantes :
1/ Préparation des substrats en verre par traitement à l'acétone,
2/Préparation d'un mélange comprenant l'adhésif du type radicalaire incorporant 0,5 à 30% d'agent migrant PTSH,
3/ Dépose d'une couche de ce mélange sur un au moins des substrats, et
4/ Pressage de cette couche formant joint entre les deux substrats et maintien jusqu'à réticulation complète de l'adhésif radicalaire.

Après réticulation complète de l'adhésif, des essais de cisaillement sont conduits, de façon comparée, entre ces deux éprouvettes et deux secondes éprouvettes en verre préparées de la même façon avec une couche du même adhésif radicalaire que les substrats du premier jeu, sans agent migrant.

Afin de permettre la migration et de générer la couche de faible cohésion pour le jeu des deux premières éprouvettes et de soumettre le second jeu aux mêmes contraintes, les deux jeux d'éprouvettes sont passés pendant deux heures à 100°C. Les tests sont des tests de cisaillement à froid, à température ambiante.

| Substrat | Vieillissement | Contrainte MPa | Type de rupture |
|---|---|---|---|
| Verre | Non | 20,4 | Délaminage du verre |
| Verre | Oui | 1,2 | Adhésive |

La diminution est encore plus importante dans un tel cas puisque la cohésion initiale entre le verre et un adhésif radicalaire est très élevée.

On note que la couche de faible cohésion conduit à des valeurs faibles sensiblement constantes de cohésion.

### 4/ Exemple 4 : Aluminium

- une base polymère constituant la matrice : par exemple une base époxy le DGEBA (diglycydil éther du bisphénol A),
- un réticulant de la base polymère choisie, en l'occurrence la DETA (diéthylène triamine),
- un agent migrant inclus dans la base polymère : par exemple du PTSH (p-toluènesulfonhydrazide), et
- un solvant servant à la dissolution du mélange et à maintenir l'agent migrant sous forme dispersée, dans ce cas un alcane.

La mise en oeuvre et les proportions sont les suivantes :
1/ Préparation d'un premier mélange A comprenant 11 parties de DETA pour 100 parties de DGEBA,
2/ Préparation d'un second mélange B par adjonction de 0,5 à 30% d'agent migrant PTSH au mélange A, et
3/ Dilution du mélange B dans une proportion de 10 à 90% d'extrait sec dans le solvant.

Les tests sur éprouvettes sont conduits de la façon suivante :
- deux premières éprouvettes en aluminium sont traitées à l'acétone puis séchées,
- ces éprouvettes sont enduites du mélange B dilué, et
- la réticulation est conduite soit par une longue durée à température ambiante soit par accélération en augmentant la température.

Après réticulation complète, des essais de cisaillement sont conduits, de façon comparée, entre ces deux éprouvettes et deux secondes éprouvettes liées entre elles par une base polymère époxy en présence d'un agent de réticulation, ceci de façon connue, mais sans agent migrant.

Afin de permettre la migration et de générer la couche de faible cohésion pour le jeu des deux premières éprouvettes et de soumettre le second jeu aux mêmes contraintes, les deux jeux d'éprouvettes sont soumis à un chauffage par induction pendant 30 secondes à 150°C.

| Substrat | Vieillissement | Contrainte MPa | Type de rupture |
|---|---|---|---|
| Aluminium | Non | 20 | Mixte: - adhésive sur aluminium |
| | | | - cohésive dans la colle |
| Aluminium | Oui | 0,6 | Adhésive |

On constate une très forte diminution de la résistance mécanique de la liaison au droit de l'interface comportant la couche de faible cohésion générée car la liaison initiale entre une base époxy et un substrat aluminium est à forte cohésion et que la migration du PTSH provoque une couche d'une particulièrement faible cohésion.

Le démontage est schématiquement représenté sur les figures 1B et 1C.

Ainsi la couche de faible cohésion est générée sur la figure 1B par l'apport de chaleur et les deux substrats sont séparés l'un de l'autre sur la figure 1C, le joint pouvant rester sur l'un des deux substrats.

## Revendications

1. Procédé d'assemblage d'un premier substrat (10) et d'un second substrat (12) par collage avec au moins un joint (14), **caractérisé en ce qu'**il consiste à réaliser la succession d'étapes suivantes :
- disposer au moins un joint (14) de matière polymère entre le premier (10) et le second substrat (12), ledit au moins un joint comprenant au moins un agent migrant apte à migrer à au moins une des interfaces du au moins un joint pour générer une couche de faible cohésion,
- presser les deux substrats (10, 12) l'un contre l'autre, et
- polymériser le au moins un joint (14) pour obtenir l'assemblage collé des deux substrats (10, 12).

2. Procédé de démontage de l'assemblage réalisé selon le procédé de la revendication 1, **caractérisé en ce qu'**il comprend les étapes suivantes :
- apporter de l'énergie à destination de l'agent migrant incorporé dans le joint en sorte de provoquer sa migration à l'interface dudit joint avec un autre joint ou avec un substrat, générant ainsi une couche de faible cohésion, et
- séparer les éléments au droit de la couche de faible cohésion.

3. Liant pour la mise en oeuvre du procédé selon la revendication 1 ou 2, **caractérisé en ce qu'**il comprend une base polymère et **en ce que** l'agent migrant est une polyoléfine.

4. Composition pour la mise en oeuvre du procédé selon la revendication 1 ou 2, **caractérisée en ce qu'**elle comprend une base polymère et **en ce que** l'agent migrant est du PTSH (p-toluènesulfonhydrazide).

5. Composition selon la revendication 4, **caractérisée en ce qu'**elle comprend entre 0,5 et 30% de PTSH en poids de la base.

6. Composition selon l'une des revendications 4 ou 5, **caractérisée en ce que** la base polymère contenant au moins un agent migrant est diluée à raison de 10 à 90% d'extrait sec dans un solvant.

7. Composition selon la revendication 4, 5 ou 6, **caractérisée en ce qu'**elle est obtenue par la succession d'étapes suivantes :
- réalisation d'une composition A avec du DGEBA (Diglycidyl bisphénol A) et de la DETA (Diéthylènetriamine),
- ajout de 0,5 à 30% de PTSH en poids à cette composition pour obtenir la composition B, et
- dilution de 10 à 90% d'extrait sec de la composition B dans un alcane.

## Claims

1. A method of assembling a first substrate (10) and a second substrate (12) by bonding with at least one joint (14), **characterised in that** it comprises performing the succession of following steps:
- disposing at least one joint (14) of polymer material between the first (10) and second (12) substrates, said at least one joint comprising at least one migrating agent able to migrate to at least of the interfaces of the at least one joint in order to generate a low-cohesion layer,
- pressing the two substrates (10, 12) against each other,
- polymerising the at least one joint (14) in order to obtain the bonded assembly of the two substrates (10, 12).

2. A method of disassembling the assembly produced according to the method of Claim 1, **characterised in that** it comprises the following steps:
- contributing energy intended for the migrating agent incorporated in the joint so as to cause its migration to the interface of said joint with another joint or with a substrate, thus generating a low-cohesion layer, and
- separating the elements in line with the low-cohesion layer.

3. A binder for implementing the method according to Claim 1 or 2, **characterised in that** it comprises a polymer base and **in that** the migrating agent is a polyolefin.

4. A composition for implementing the method according to Claim 1 or 2, **characterised** that it comprises a polymer base and in that the migrating agent is PTSH (p-toluenesulfonhydrazide).

5. A composition according to Claim 4, **characterised in that** it comprises between 0.5 and 30% PTSH by weight of the base.

6. A composition according to one of Claims 4 or 5, **characterised in that** the polymer base containing at least one migrating agent is diluted at the rate of from 10 to 90% dry extract in a solvent.

7. A composition according to Claim 4, 5 or 6, **characterised in that** it is obtained by the succession of following steps:
- producing a composition A with DGEBA (diglycidyl bisphenol A) and DETA (diethylenetriamine),
- adding from 0.5 to 30% PTSH by weight to this composition in order to obtain composition B, and
- diluting from 10 to 90% dry extract of composition B in an alkane.

## Patentansprüche

1. Verfahren zum Zusammenfügen eines ersten Substrats (10) und eines zweiten Substrats (12) mittels Kleben mit mindestens einer Fugendichtung (14), **dadurch gekennzeichnet, dass** es darin besteht, die folgenden Schritte nacheinander durchzuführen:
- Anordnen mindestens einer aus einem Polymerwerkstoff bestehenden Fugendichtung (14) zwischen dem ersten (10) und dem zweiten Substrat (12), wobei die mindestens eine Fugendichtung mindestens einen Migrationsstoff aufweist, der fähig ist, an mindestens einer der Grenzflächen der mindestens einen Fugendichtung zu migrieren, um eine Schicht mit schwacher Kohäsion zu bilden,
- Zusammendrücken der beiden Substrate (10, 12), und
- Polymerisieren der mindestens einen Fugendichtung (14) zum Erzielen der klebenden Zusammenfügung der beiden Substrate (10, 12).

2. Verfahren zum Lösen der nach dem Verfahren nach Anspruch 1 hergestellten Verbindung, **dadurch gekennzeichnet, dass** es folgende Schritte umfasst:
- Zuführen von Energie zu dem in der Fugendichtung eingebauten Migrationsstoff, um dessen Migration in die Grenzfläche der Fugendichtung zu einer anderen Fugendichtung bzw. zu einem Substrat zu bewirken, so dass eine Lage mit einer schwachen Kohäsion erzeugt wird, und
- Trennen der Elemente im Lot zur Lage mit schwacher Kohäsion.

3. Bindemittel zur Durchführung des Verfahrens nach Anspruch 1 oder 2, **dadurch gekennzeichnet, dass** es eine Polymerbasis umfasst und dass der Migrationsstoff ein Polyolefin ist.

4. Zusammensetzung zur Durchführung des Verfahrens nach Anspruch 1 oder 2, **dadurch gekennzeichnet, dass** sie eine Polymerbasis umfasst und dass der Migrationsstoff PTSH (p-Toluol-sulfo-hydrazid) ist.

5. Zusammensetzung nach Anspruch 4, **dadurch gekennzeichnet, dass** sie zwischen 0,5 und 30 % PTSH bezogen auf das Gewicht der Basis umfasst.

6. Zusammensetzung nach einem der Ansprüche 4 oder 5, **dadurch gekennzeichnet, dass** die mindestens einen Migrationsstoff enthaltende Polymerbasis in Form von 10 bis 90 % Trockenextrakt in einem Lösungsmittel verdünnt ist.

7. Zusammensetzung nach Anspruch 4, 5 oder 6, **dadurch gekennzeichnet, dass** sie durch die Abfolge folgender Schritte erzielt wird:
- Zubereitung einer Zusammensetzung A mit DGEBA (Diglycidyl bisphenol A) und mit DETA (Diethylentriamin),
- Zufügen von 0,5 bis 30 Gew.-% PTSH zu dieser Zusammensetzung zum Erzielen der Zusammensetzung B, und
- Verdünnen von 10 bis 90 % Trockenextrakt der Zusammensetzung B mit einem Alkan.
